# EUROPÄISCHE PATENTSCHRIFT

(11) **EP 0 647 192 B1**
(45) Veröffentlichungstag und Bekanntmachung des Hinweises auf die Patenterteilung: **31.01.1996**
(21) Anmeldenummer: 93915782.2
(22) Anmeldetag: 02.07.1993
(51) Int. Cl.: B62M 1/02

(54) **KETTENRADADAPTER FÜR FAHRRÄDER**
CHAIN WHEEL ADAPTER FOR BICYCLES
ADAPTATEUR DE ROUES DENTEES DE BICYCLETTES

(30) Priorität: 03.07.1992 DE 4221831; 15.12.1992 DE 4242310
(43) Veröffentlichungstag der Anmeldung: 12.04.1995
(73) Patentinhaber: Abele, Roland, 73433 Aalen (DE)
(72) Erfinder: ABELE, Marcus, D-7080 Aalen 1 (DE); ABELE, Roland, D-7080 Attenhofen (DE); LEPPACK, Welfo, D-7070 Oberbettringen (DE)
(74) Vertreter: Lehmann, Klaus, Dipl.-Ing.
(86) Internationale Anmeldenummer: EP9301717
(87) Internationale Veröffentlichungsnummer: WO9401319

(56) Entgegenhaltungen:
- DE-A- 2 532 856
- DE-U- 8 911 528
- FR-A- 2 611 642
- GB-A- 586 803

## Beschreibung

Die Erfindung bezieht sich auf einen Kettenradadapter für die Tretlagerwelle von Fahrrädern. Bekanntermaßen ist der rechte Kurbelarm einteilig ausgebildet mit einem fünfarmigen Stern, an dessen Außenenden die beiden größten Kettenräder geschraubt werden. Wird ein drittes Kettenrad vorgesehen, so muß es von der Gegenseite her angeschraubt werden. Dies kompliziert die Montage. (Der hier verwendete Ausdruck "Kettenrad" soll gleichbedeutend sein mit "Zahnkranz", "Ritzel", "Kettenblatt", "Kettenring").

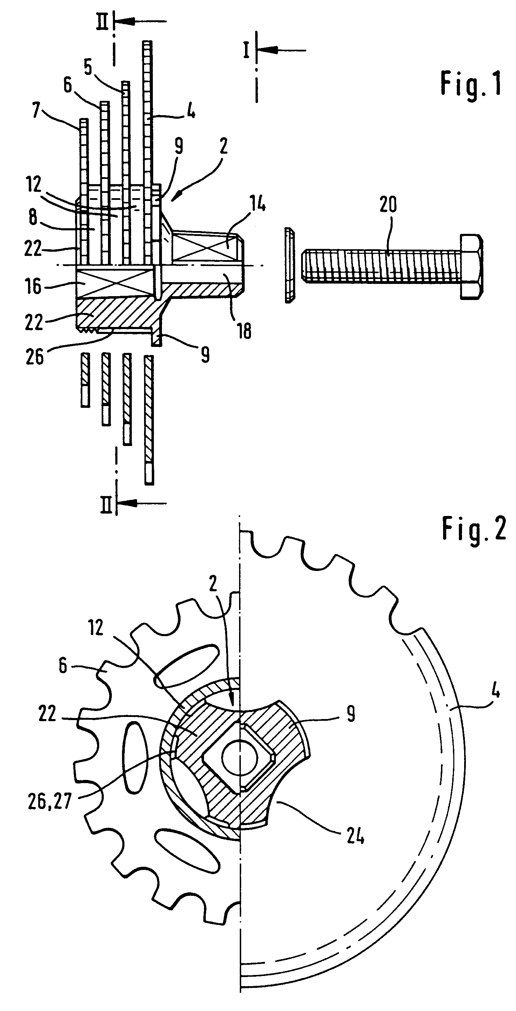

Die französische Patentanmeldung FR-A-2 611 642 (D1) beschreibt einen Kettenradadapter für die Tretlagerwelle von Fahrrädern, dessen Hauptteil im wesentlichen kreiszylindrisch und durch eine innere formschlüssige Verbindung mit der Tretlagerwelle des Fahrrades drehfest in Eingriff zu bringen ist. An der Außenseite des Hauptteiles ist ein Flansch angebracht, der sternförmig angeordnete, mit Bohrungen versehene Haltelaschen aufweist, über die Kettenräder am Hauptteil befestigt werden können. Dies geschieht dadurch, daß durch die Bohrungen in den Laschen Schrauben durchgesteckt werden, die in den entsprechenden Gewinden der Kettenräder befestigt werden. Diese Befestigung dient eigentlich nur einem Kettenrad. Wird ein weiteres Kettenrad gewünscht, so muß dieses entweder seitlich über eine eigene Befestigung am zuvor erwähnten Kettenrad befestigt werden, oder es wird ein Zwischenträgerteil, wie es in der Figur 2 der entsprechenden Entgegenhaltung gezeigt ist, am Hauptteil in der genannten Weise befestigt. Die Kettenräder werden dann wiederum an diesem Zwischenteil befestigt. Es ist also hier eine umständliche indirekte Befestigung für Kettenräder vorgesehen.

Der Kettenradadapter nach der Erfindung (im folgenden einfach "Adapter" genannt) soll sowohl zum Ausrüsten neuer Räder wie auch zum Nachrüsten gebrauchter Räder geeignet sein.

Die Erfindung hat Bedeutung einerseits für Mountain Bikes, Rennräder sowie normale City Bikes, die vorne und hinten je einen Satz Kettenräder haben, aber auch für Kinderräder. Bei Kinderrädern kann die Schaltung von hinten nach vorne verlegt werden.

Der Adapter soll die Montage vereinfachen. Er soll es darüber hinaus ermöglichen, daß mehr als drei, z.B. vier oder fünf Kettenräder auf einfache Weise montiert werden können. Ferner soll die Erfindung es ermöglichen, daß das größte Kettenrad kleiner gemacht werden kann als bisher, ohne daß sich an der größten erreichbaren Übersetzung etwas ändert. Entsprechend kleiner sind dann auch die übrigen vorderen Kettenräder. Die bisherige Serienausstattung der Übersetzung an Mountain Bikes und All Terrain Bikes (ATB's) ist für ungeübte Fahrer unzulänglich. Durch die Erfindung soll die Möglichkeit geschaffen werden, durch Austauschen von Kettenrädern individuell die gewünschten Übersetzungsverhältnisse einzustellen. Für den Aufstieg an Bergstrecken sollen Untersetzungsverhältnisse von z. B. 0,57 ermöglicht werden (Kettenräder mit 17 Zähnen vorn und 30 Zähnen hinten) oder 0,61 (17 Zähne vorn und 28 Zähne hinten).

Alle genannten Forderungen zugleich werden durch die Erfindung in zwei Varianten nach den Ansprüchen 1 und 7 gelöst. (In den folgenden Ausführungen werden auch die in den Ansprüchen definierten Begriffe verwendet.)

Anstelle des mit dem Kurbelarm einstückig verbundenen Sternes wird nach beiden Varianten der Erfindung also ein Kettenradadapter verwendet, dessen Hauptteil durch eine formschlüssige Verbindung mit der Innenlagerwelle des Fahrrades drehfest in Eingriff zu bringen ist.

Zur sicheren, drehfesten Halterung der Kettenräder ist der Adapter an seinem Umfang mit achsparallelen Nuten versehen, in die innere Vorsprünge der aufzusteckenden Kettenräder eingreifen.

Gemäß Anspruch 1 hat der Hauptteil an seiner dem Rahmen zuzukehrenden Seite (Rahmenseite) ein Rechtsgewinde zum Aufschrauben des kleinsten Kettenrades (Schraubritzels) oder eines Konterringes, die mit Innengewinde versehen sind.

Dadurch, daß die vorne aufzunehmenden und somit auch die hinten aufzunehmenden größten Kettenräder kleiner sind als bei herkömmlichen Radgarnituren, erzielt man eine größere Bodenfreiheit sowie eine Gewichtsersparnis. Hierzu trägt auch bei, daß man mit einem kleineren Schaltkäfig auskommt, da die zu überbrückenden Unterschiede der Kettenlänge kleiner sind als bei herkömmlichen Kettenradgarnituren. Der kleinere Schaltarm macht die Schaltung weniger anfällig gegen Beschädigung, Verbiegen und dergleichen bei Stößen oder Stürzen.

Der Kettenradadapter läßt sich, je nach der Anordnung seiner Nuten, mit serienmäßigen Kettenrädern verschiedener Hersteller bestücken. Man kann auch Kettenräder, die für das hintere Lager bestimmt sind, vorne hinsetzen.

Dadurch, daß auf dem Adapter vier oder fünf Kettenräder untergebracht werden können, ergibt sich der Vorteil, daß man an der Hinterradnabe, auch bei extrem viel verfügbaren Gängen, statt der bisher vorhandenen acht Kettenräder nur sieben unterzubringen braucht. Die Unterbringung von acht Kettenrädern hinten hatte den Nachteil, daß man die Speichen nicht mehr symmetrisch zu einer Mittelebene des Hinterrades anordnen konnte, sondern stark unsymmetrisch, so daß sie also auf der einen Seite einen größeren und auf der anderen Seite einen kleineren Winkel mit der Mittelebene einschlossen. Man nennt dies einen starken "Schirmstand" der Speichenstellung. Dieser geht aber auf Kosten der Stabilität des Rades.

Nach der Erfindung lassen, sich bei sieben Kettenrädern am Hinterrad, 28 verschiedene Gänge bei Mountain Bikes und 21 verschiedene Gänge bei Rennrädern erzielen, und zwar schon bei vier Kettenrädern am Adapter, noch mehr Gänge bei fünf Kettenrädern am Adapter.

Die gleichen Vorteile lassen sich auch durch die oben erwähnte Variante der Erfindung gemäß Anspruch 7 erzielen. Anstelle des Rechtsgewindes an seiner Rahmenseite hat der Adapter gemäß Anspruch 7 an seiner Rahmenseite einen Anschlagflansch. Alle Kettenräder werden also von der Tretkurbelseite her aufgesteckt. Der Hauptteil ist durch eine äußere formschlüssige Verbindung mit dem Tretkurbelarm drehfest zu verbinden.

Diese Variante hat den zusätzlichen Vorteil, daß alle Kettenräder nach Abnahme der Tretkurbel von außen her aufgesteckt und abgenommen werden können. Es ist also nicht erforderlich, den Adapter von der Innenlagerwelle zu trennen.

### Weiterbildungen der Erfindung

ergeben sich aus den Unteransprüchen.

Der Adapter kann eine äußere formschlüssige Verbindung zum Aufstecken des rechten Tretkurbelarmes haben.

Ferner läßt sich der Adapter einstückig mit dem Tretkurbelarm ausbilden.

Der Hauptteil des Adapters kann bei der ersten Variante der Erfindung an seiner Tretkurbelseite einen Anschlagflansch haben. Dieser bildet dann die äußerste Grenze für die aufzusteckenden Kettenräder. Nach dem Aufstecken wird der Kettenradpacken an der Rahmenseite entweder durch Aufschrauben eines Konterringes oder durch Aufschrauben des kleinsten Kettenrades (Schraubritzels) festgezogen.

Ebenfalls noch bei der ersten Variante der Erfindung kann der Hauptteil des Kettenradadapters anstelle eines Anschlagflansches an seiner Tretkurbelseite mit einem Linksgewinde versehen sein, so daß hier ein Konterring aufgeschraubt werden kann. Diese Anordnung hat den Vorteil, daß das ganze Kettenradpaket einschließlich von zwischen den Kettenrädern angeordneten Distanzringen so weit wie möglich gegen die Rahmenseite geschoben werden kann, was vorteilhaft für die Kettenführung ist.

Man kann den Adapter an der Rahmenseite mit einem Rechtsgewinde versehen, das bis an den Anschlagflansch reichen kann. Stattdessen kann man bei Wegfall des Anschlagflansches von der Kurbelseite her ein Linksgewinde vorsehen, das einen Konterring aufnehmen kann und gegebenenfalls das größte Kettenrad ebenfalls.

Der Hauptteil läßt sich bei beiden Varianten mit einer einzigen Schraube an der Innenlagerwelle befestigen.

Bei der zweiten Variante der Erfindung kann nach Anspruch 8 zur Befestigung der Kettenräder ein Bajonettverschluß an der Tretkurbelseite des Adapters dienen.

Hierbei kann nach Anspruch 9 der Bajonettverschluß durch Linksdrehung zu schließen sein, was den Bajonettverschluß im normalen Fahrbetrieb gegen Lösen sichert. Die Endstellung der Linksdrehung ergibt sich durch die Packung der Kettenräder und Distanzringe.

Wird das größte Kettenrad zweiteilig ausgebildet, so daß nach der zweiten Variante eine Tragscheibe innen einen Teil des Bajonettverschlusses bildet, während sie außen einen Zahnkranz trägt, so können Zahnkranz und Tragscheibe an ihrem Umfang unter gleichen Winkelabständen mit achsparallelen Bohrungen versehen sein, die zum Anschrauben eines Zahnkranzes dienen. Auf diese Weise hat man die Möglichkeit, serienmäßige Zahnkränze mit Hilfe des Bajonettverschlusses anzubringen.

Ausführungsbeispiele mit weiteren Merkmalen der Erfindung werden im folgenden anhand der Zeichnungen beschrieben.
- Figur 1: zeigt in Seitenansicht und Explosivdarstellung einen Kettenradadapter nach der ersten Variante der Erfindung mit einem Packen Kettenrädern sowie eine Befestigungsschraube für den Adapter.
- Figur 2: zeigt rechts in Seitenansicht aus der Ebene I in Fig. 1 den Kettenradadapter mit dem äußersten Kettenrad sowie links einen Querschnitt in der Ebene zu II - II.
- Figur 3: zeigt einen Kettenradadapter, ebenfalls nach der ersten Variante der Erfindung, jedoch mit einem Anschlagflansch in Seitenansicht, z. T. im Schnitt.
- Figur 4: zeigt den Kettenradadapter nach Fig. 3 in Ansicht von rechts.
- Figur 5: zeigt eine andere Ausführungsform der ersten Variante eines Kettenradadapters in schematisierter Seitenansicht mit Kettenrädern und einem angedeuteten Teil der Tretkurbel.
- Figur 6: zeigt in Seitenansicht einen Kettenradadpter nach der zweiten Variante der Erfindung, eingerichtet für einen Bajonettverschluß.
- Figur 7: zeigt den Adapter nach Figur 6 von rechts her gesehen.
- Figur 8: zeigt in Ansicht, teilweise das äußerste Kettenrad mit Innenvorsprüngen für den Bajonettverschluß.
- Figur 9: zeigt in Draufsicht eine Tragscheibe und die rechte Hälfte eines zugehörigen Zahnkranzes.

Fig. 1 zeigt oben in Seitenansicht, unten im axialen Längsschnitt, einen Kettenradadapter 2 (im folgenden kurz "Adapter" genannt). Auf den Adapter werden von links in Figur 1 her zunächst das größte Kettenrad 4 gesteckt, dann ein Distanzring 12, dann das Kettenrad 5, ein weiterer Distanzring 12 und das Kettenrad 6. Anschließend wird von links her mit Rechtsgewinde das kleinste und mit Innengewinde versehene Kettenrad 7 (hier auch "Schraubritzel" genannt) aufgeschraubt. Es ist einstückig mit einem eigenen Distanzring 8 versehen, der ebenfalls ein Innengewinde hat.

Der Adapter hat rechts einen sich nach außen verjüngenden Vierkant 14, an dem die Tretkurbel zu befestigen ist. Stattdessen kann er auch einstückig mit dem Tretkurbelarm ausgebildet sein, was hier nicht zeichnerisch dargestellt ist. Der Adapter hat links einen Innen-Vierkant 16, der zum Befestigen des Adapters an einem Außen-Vierkant der Innenlagerwelle dient. Der Adapter hat eine zentrale durchgehende Bohrung 18, so daß er mit Hilfe eines Schraubbolzens 20 an der Innenlagerwelle zu befestigen ist.

Anstelle von Innenvierkant und Außenvierkant läßt sich der Adapter mit der Innenlagerwelle und der Tretkurbel auch durch eine Vielnutverbindung drehfest kuppeln. In diesem Falle hat der Adapter innen eine zylindrische Bohrung mit gleichmäßig über den Umfang verteilten achsparallelen Nuten, während an der Innenlagewelle achsparallele Leisten zum Eingriff in die Nuten vorgesehen sind. Ebenso kann der Adapter an seiner Tretkurbelseite einen zylindrischen Fortsatz mit Leisten haben, während die Tretkurbel eine zylindrische Bohrung mit Nuten aufweist. Dergleichen ist in den Zeichnungen nicht dargestellt und gilt für alle hier beschriebenen Ausführungsformen.

Figur 2 zeigt rechts in Außenansicht aus der Ebene 1 nach Fig. 1 den Adapter und, angedeutet, das größte Kettenrad 4. Links zeigt Figur 2 in Ansicht das Kettenrad 6 und im Querschnitt den Adapter. Der Hauptteil 22 dieses Adapters ist nicht zylindrisch, sondern hat einen Querschnitt nach Art eines dreiarmigen Sternes. Die Kettenräder haben entsprechend geformte einwärts ragende Rundungen 24. Zum exakten drehsicheren Halt hat der Adapter zusätzlich achsparallele Nuten 26, passend zu den Kettenrädern eines bestimmen Herstellers. In diese Nuten greifen die bekannten Innenvorsprünge 27 (Figur 2) der Kettenräder 4 bis 6 ein. Auch hier ist also eine Vielnutverbindung vorgesehen.

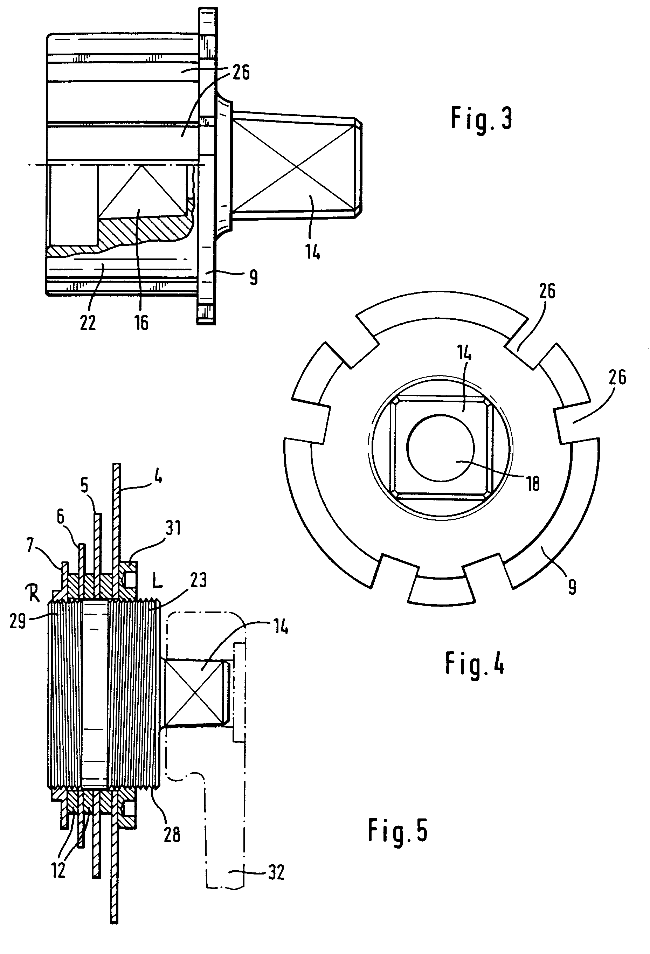

Die Figuren 3 und 4 zeigen in Seitenansicht bzw. in Ansicht von rechts in Figur 3 einen etwas anders ausgestalteten Adapter. Gleiche und ähnliche Teile wie in den Figuren 1 und 2 sind hier mit gleichen Bezugszeichen versehen. Wie Fig. 4 zeigt, ist der Hauptteil hier im wesentlichen kreiszylindrisch und mit sechs achsparallelen Nuten 26 versehen. Hierzu passende Kettenräder haben entsprechend gestaltete Innenvorsprünge.

Fig. 5 zeigt im Querschnitt eine abgewandelte Ausführungsform des Adapters. Sein Hauptteil 23 hat rechts, an der Seite seiner Tretkurbel 32 keinen Anschlagflansch sondern ein Linksgewinde 28. An seiner gegenüberliegenden Seite, der Rahmenseite, hat er ein Rechtsgewinde 29. Die Kettenräder 4, 5 und 6 werden aufgesteckt, wobei hier nicht dargestellte Nuten (wie 26 in Figur 4) für drehfesten Sitz sorgen.

Von der Rahmenseite her wird ein Kettenrad 7 mit Innengewinde, ein "Schraubritzel" aufgeschraubt. Von der Kurbelseite her wird ein mit Innengewinde versehener Konterring 31 aufgeschraubt. Diese Anordnung hat den Vorteil, daß man nach Abziehen der Tretkurbel nur den Konterring 31 abzudrehen braucht und sofort Zugang zu den aufgesteckten Kettenrädern 4, 5 und 6 hat.

Es können auch fünf statt der hier dargestellten vier Kettenräder auf dem Adapter untergebracht werden.

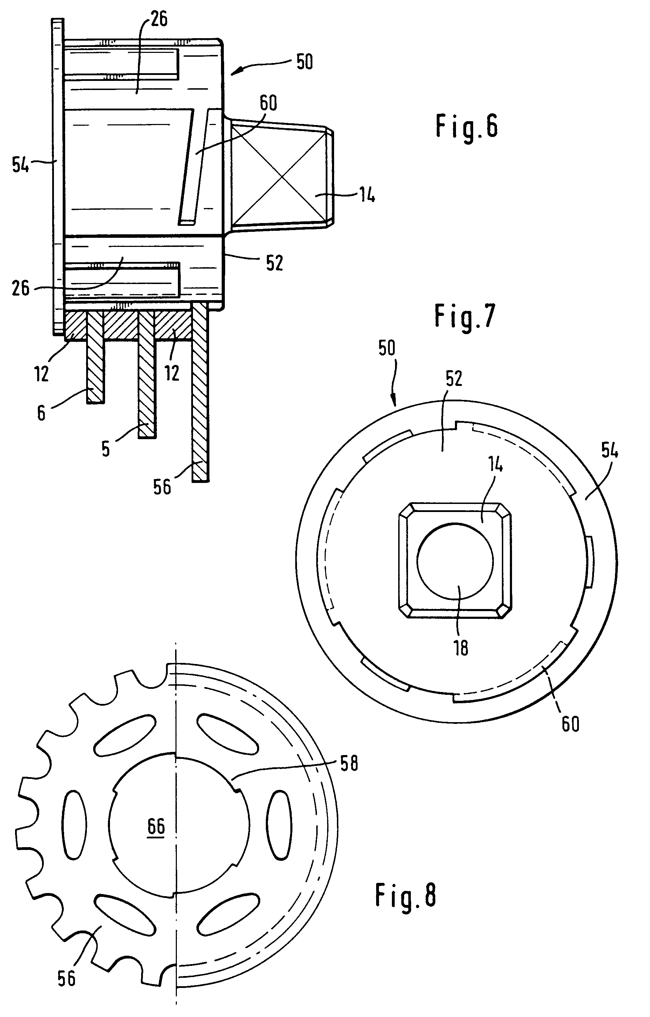

Figur 6 und 7 zeigen einen andersartigen Adapter 50 in Seitenansicht bzw. Ansicht von rechts. Sein Hauptteil 52 hat links in Figur 6, also an der Rahmenseite einen Anschlagflansch 54. Kettenräder 5 und 6, von denen nur ein Stück ihrer unteren Hälfte dargestellt ist, und Distanzringe 12 werden von rechts her aufgeschoben. Es können auch mehr als die hier dargestellten beiden Kettenräder 5, 6 und Distanzringe 12 sein. Wie anhand der Figuren 3 und 4 beschrieben, greifen sie mit Innenvorsprüngen in achsparallele Nuten 26 ein. Es wird links, also am nächsten beim Fahrradrahmen, das kleinste Kettenrad 6 aufgesteckt, nach rechts hin immer größere Kettenräder. Schließlich wird das größte, äußerste Kettenrad 56 zunächst von rechts her aufgesteckt, dann aber mit seinen sternförmig angeordneten drei Innenvorsprüngen 58 in drei schrägliegende Nuten 60 des Hauptteils 52 durch Linksdrehung verankert. Die Innenvorsprünge 58 und die Nuten 60 bilden also gemeinsam einen Bajonettverschluß. Die axialen Abmessungen sind so gewählt, daß die Innenvorsprünge nicht ganz bis zum Ende der Nuten eingedreht werden können. Vielmehr wird die dichtestmögliche Packung von Kettenrädern und Distanzringen schon etwas vorher erreicht.

Bei dieser Ausführungsform kann man bei einem auf der Innenlagerwelle befestigten Adapter, nach Entfernen der Tretkurbel, lediglich durch Lösen des Bajonettverschlusses, was durch Rechtsdrehung geschieht, Zugang zu sämtlichen Kettenrädern und Distanzringen haben. Der ganze Kettenradpacken kann einfach abgezogen werden.

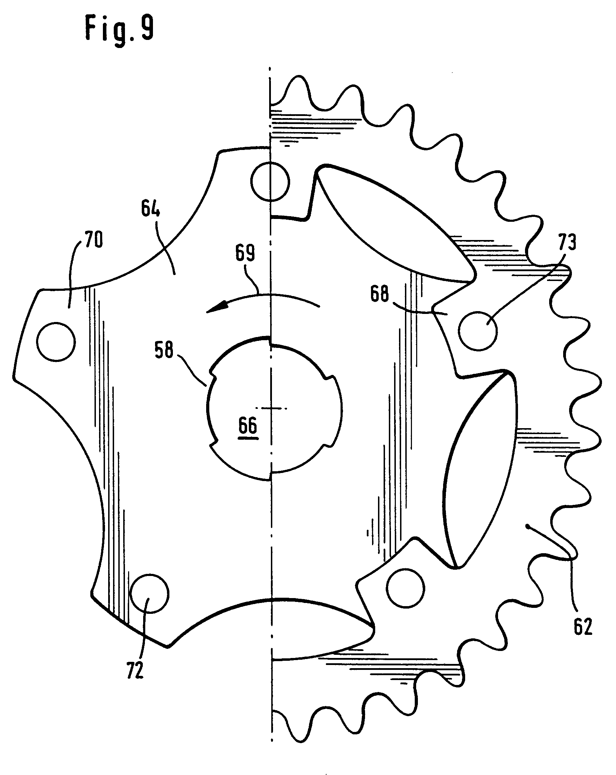

Wie Figur 9 in Außenansicht zeigt, dies entspricht einer Blickrichtung von rechts in Figur 6, kann anstelle des äußeren Kettenrades ein Zahnkranz 62 vorgesehen sein, der sich an einer Tragscheibe 64, die nach Art eines Fünfsternes ausgebildet ist, befestigen läßt. Die Tragscheibe hat in ihrer Mittelöffnung 66 wiederum drei sternartig angeordnete Innenvorsprünge 58 als Teile des Bajonettverschlusses. Damit läßt sich die Tragscheibe 64 in Richtung eines Pfeils 69, also durch Linksdrehung, auf- und festdrehen.

Anstelle eines Bajonettverschlusses kann ein Linksgewinde zur Festlegung der Kettenräder am Hauptteil dienen. Der Hauptteil 52 (Figur 6) trägt dann ganz rechts das Außengewinde. Das äußerste Kettenrad 56 oder die Tragscheibe 64 (Figur 9) können in ihrer Mittelöffnung das Innengewinde haben. Statt dessen kann ein zusätzlicher Gewindering zum Anschrauben der Kettenräder dienen.

Der Zahnkranz hat einwärts gerichtete Vorsprünge 68. An fünf äußeren Armen 70 der Tragscheibe und fünf inneren Vorsprüngen 68 des Zahnkranzes sind deckungsgleich fünf achsparallele Bohrungen 72 bzw. 73 vorgesehen. Mit Hilfe von Schraubbolzen, die durch diese Bohrungen gesteckt werden, lassen sich Tragscheibe 64 und Zahnkranz 62 miteinander verschrauben.

## Patentansprüche

1. Kettenradadapter (2) für die Tretlagerwelle von Fahrrädern
a) mit einem im wesentlichen kreiszylindrischen Hauptteil (22, 23),
b) wobei der Hauptteil durch eine innere formschlüssige Verbindung mit der Tretlagerwelle des Fahrrades drehfest in Eingriff zu bringen ist,
dadurch **gekennzeichnet**,
c) daß der Hauptteil (22) an seinem Umfang achsparallele Nuten (26) zur Drehsicherung von mit Innenvorsprüngen versehenen Kettenrädern (4, 5, 6) hat,
d) daß der Hauptteil eine ausreichende axiale Länge zur Aufnahme von mehr als drei, insbesondere bis zu fünf Kettenrädern und zugehörigen Distanzringen (12, 8) und Befestigungsmitteln hat und
e) daß der Hauptteil an seiner Rahmenseite ein Rechtsgewinde (29) zum Aufschrauben des kleinsten Kettenrades (7) oder eines Konterringes hat.

2. Kettenradadapter nach Anspruch 1, dadurch **gekennzeichnet**, daß der Hauptteil durch eine äußere formschlüssige Verbindung mit einem Tretkurbelam drehfest zu verbinden ist.

3. Kettenradadapter nach Anspruch 1, dadurch **gekennzeichnet**, daß der Hauptteil einstückig mit einem Tretkurbelarm ausgebildet ist.

4. Kettenradadapter nach einem der vorangehenden Ansprüche, dadurch **gekennzeichnet**, daß der Hauptteil an seiner Tretkurbelseite einen Anschlagflansch (9) hat.

5. Kettenradadapter nach einem der Ansprüche 1 bis 3, dadurch **gekennzeichnet**, daß der Hauptteil (23) an seiner Tretkurbelseite ein Linksgewinde (28) zum Aufschrauben eines Konterringes (31) hat.

6. Kettenradadapter nach einem der Ansprüche 1 bis 5, dadurch **gekennzeichnet**, daß am Umfang des Hauptteiles (23) an der Rahmenseite ein Rechtsgewinde (29) zum Aufschrauben eines Konterringes oder Kettenrades (7) vorgesehen ist.

7. Kettenradadapter (50) für die Tretlagerwelle von Fahrrädern
a) mit einem im wesentlichen kreiszylindrischen Hauptteil (52) hat,
b) wobei der Hauptteil durch eine innere formschlüssige Verbindung mit der Tretlagerwelle des Fahrrades drehfest in Eingriff zu bringen ist,
dadurch **gekennzeichnet**,
c) daß der Hauptteil (52) an seinem Umfang achsparallele Nuten (26) zur Drehsicherung von mit Innenvorsprüngen versehenen Kettenrädern (5, 6) hat,
d) daß der Hauptteil eine ausreichende axiale Länge zur Aufnahme von mehr als drei, insbesondere bis zu fünf Kettenrädern und zugehörigen Distanzringen (12) und Befestigungsmitteln hat und
e) daß der Hauptteil an seiner Rahmenseite einen Anschlagflansch (54) hat und
f) daß der Hauptteil durch eine äußere formschlüssige Verbindung mit einem Tretkurbelam drehfest zu verbinden ist.

8. Kettenradadapter nach Anspruch 7, dadurch **gekennzeichnet**, daß zur Bildung eines Bajonettverschlusses der Hauptteil am Umfang nahe seiner Tretkurbelseite schräg liegende Nuten (60) und das an der Tretkurbelseite äußerste Kettenrad (56) oder eine dieses tragende Scheibe (Tragscheibe) (64) innerhalb seiner/ihrer Mittelöffnung (66) zu den Nuten passende Innenvorsprünge (58) hat.

9. Kettenradadapter nach Anspruch 8, **gekennzeichnet**, durch eine solche Ausbildung der Bajonettverschlusses, daß er durch Linksdrehung zu schließen ist.

10. Kettenradadapter nach Anspruch 8, dadurch **gekennzeichnet**, daß die (insbesondere fünfarmig ausgebildete) Tragscheibe (64) durch Verschraubung eine formschlüssige Verbindung zwischen dem Hauptteil (52) des Adapters und einem Kettenrad-Zahnkranz (62) bildet.

11. Kettenradadapter nach einem der vorangehenden Ansprüche, dadurch **gekennzeichnet**, daß der Hauptteil eine durchgehende axiale Bohrung (18) zur Aufnahme einer Befestigungsschraube (20) hat.

## Claims

1. A sprocket adapter (2) for the pedal bearing shaft of bicycles
a) having a essentially regularly cylindrical main part (22, 23),
b) said main part being adapted to be engaged non-rotatably with the pedal bearing shaft of the bicycle by a inner positive lock,
**characterized in that**
c) said main part (22) is provided with circumferential grooves (26) oriented parallel to its centerline for non-rotatable locking the sprockets (4, 5, 6) provided with internal projections,
d) said main part has an axial length sufficient to accomodate more than three, particularly up to five sprockets and their associated spacer rings (12, 8) and fastener means, and
e) said main part has on its frame side a right-hand thread (29) for screwing on the smallest sprocket (7) or a locking ring.

2. The sprocket adapter according to claim 1, **characterized in that** said main part is adapted to be connected non-rotatably to the pedal crank arm by a external positive connection.

3. The sprocket adapter according to claim 1, **characterized in that** said main part is formed integral with a pedal crank arm.

4. The sprocket adapter according to any of the preceding claims, **characterized in that** said main part has an abutment flange (9) on its pedal crank side.

5. The sprocket adapter according to any of the claims 1 to 3, **characterized in that** said main part (23) has a left-hand thread (28) on its pedal crank side for screwing on a locking ring (31).

6. The sprocket adapter according to any of the claims 1 to 5, **characterized in that** a right-hand thread (29) is provided circumferentially on said main part (23) on the frame side for screwing on a locking ring or a sprocket (7).

7. A sprocket adapter (50) for the pedal being shaft of bicycles
a) having an essentially regularly cylindrical main part (52),
b) said main part being adapted to be engaged non-rotatably with the pedal bearing shaft of the bicycle by a inner positive lock,
**characterized in that**
c) said main part (52) is provided with circumferential grooves (26) oriented parallel to its centerline for non-rotatable locking the sprockets (5, 6) provided with internal projections,
d) said main part has axial length sufficient to accomodate more than three, particularly up to five sprockets and their associated spacer rings (12) and fastener means, and
e) said main part has an abutment flange (54) on its frame side and
f) said main part is adapted to be connected non-rotatably with a pedal crank arm by an external positive connection.

8. The sprocket adapter according to claim 7, **characterized in that** to form a bayonet lock said main part has on its circumference in the vicinity of its pedal crank side skew grooves (60) and in that the outermost sprocket (56) on the pedal crank side or a disk mounting the latter (mounting disk) (64) has within its central opening (66) respectively internal projections (58) corresponding with said grooves.

9. The sprocket adapter according to claim 8**, characterized in that** it is adapted to be closed by counter-clockwise rotation by such embodiment of said bayonet lock.

10. The sprocket adapter according to claim 8, **characterized in that** screwing said (particularly five-legged) mounting disk (64) forms a positive connection between said main part (52) of the adapter and a sprocket rim gear (62).

11. The sprocket adapter according to any of the preceding claims, **characterized in that** said main part has a axial through-hole (18) for receiving a fastener bolt (20).

## Revendications

1. Adaptateur de roues dentées (2) pour l'arbre du palier de pédalier de bicyclettes comportant
a) une pièce principale essentiellement en forme de cylindre circulaire (22, 23),
b) la pièce principale pouvant être engagée de manière à bloquer le pivotement moyennant un raccordement interne à engagement positif dans l'arbre du palier de pédale de la bicyclette,
caractérisé en ce que
c) la pièce principale (22) présente sur sa circonférence des rainures parallèles à l'axe (26) pour bloquer le pivotement des roues dentées (4, 5, 6) pourvues de saillies internes,
d) que la pièce principale présente une longueur axiale suffisante pour recevoir plus de trois, notamment jusqu'à cinq roues dentées et bagues d'espacement associées (12, 8) et moyens de fixation et
e) que la pièce principale du côté cadre présente un filet tournant vers la droite (29) pour visser la roue dentée la plus petite (7) ou une bague antagoniste.

2. Adaptateur de roues dentées selon la revendication 1, caractérisé en ce que la pièce principale peut être raccordée de manière à empêcher le pivotement par un raccordement à engagement positif extérieur à une manivelle de pédalier.

3. Adaptateur de roues dentées selon la revendication 1, caractérisé en ce que la pièce principale est formée d'une pièce avec une manivelle de pédalier.

4. Adaptateur de roues dentées selon l'une quelconque des revendications précédentes, caractérisé en ce que la pièce principale présente une flasque de butée (9) du côté de la manivelle de pédalier.

5. Adaptateur de roues dentées selon l'une quelconque des revendications 1 à 3, caractérisé en ce que la pièce principale (23) possède sur son côté de manivelle de pédalier un filet tournant à gauche (28) pour visser une bague antagoniste (31).

6. Adaptateur de roues dentées selon l'une quelconque des revendications 1 à 5, caractérisé en ce que sur la circonférence de la pièce principale (23), côté cadre, un filet tournant à droite (29) pour visser une bague antagoniste ou une roue dentée (7) est prévu.

7. Adaptateur de roues dentées (50) destiné à un arbre de palier de pédalier de bicyclettes présentant
a) une pièce principale (52) essentiellement en forme de cylindre circulaire (22, 23),
b) la pièce principale pouvant être engagée de manière à bloquer le pivotement, moyennant un raccordement interne à engagement positif, dans l'arbre du palier de pédale de la bicyclette,
caractérisé en ce que
c) la pièce principale (52) présente sur sa circonférence des rainures (26) parallèles à l'axe pour bloquer le pivotement des roues dentées (5, 6) présentant des saillies internes,
d) que la pièce principale présente une longueur axiale suffisante pour recevoir plus de trois, notamment jusqu'à cinq roues dentées et des bagues d'espacement (12) y associées ainsi que des moyens de fixation et
e) que la pièce principale présente du côté du cadre une flasque de butée (54) et
f) que la pièce principale est à raccorder de manière à empêcher la rotation à une manivelle de pédalier moyennant un raccordement extérieur à engagement positif.

8. Adaptateur de roues dentées selon la revendication 7, caractérisé en ce que pour la formation de la fermeture à baïonnette, la pièce principale présente sur la circonférence à proximité du côté présentant la manivelle de pédalier une rainure (60) s'étendant obliquement et que sur la roue dentée (56) la plus à l'extérieur par rapport à la manivelle de pédalier, ou un disque qui porte la roue (disque porteur) (64) présente à l'intérieur de son ouverture médiane (66) des saillies intérieures (58) conformes aux rainures.

9. Adaptateur de roues dentées selon la revendication 8, caractérisé en ce qu'une telle exécution de la fermeture à baïonnette permet la fermeture par une rotation vers la gauche.

10. Adaptateur de roues dentées selon la revendication 8, caractérisé en ce que le disque support (64) (surtout dans sa forme à cinq bras) forme par vissage un raccordement à engagement positif entre la pièce principale (52) de l'adaptateur et une couronne dentée (62) de roue dentée.

11. Adaptateur de roues dentées selon l'une quelconque des revendications précédentes, caractérisé en ce que la pièce principale présente un alésage axial traversant (18) pour recevoir une vis de fixation (20).
